(19) **Europäisches Patentamt / European Patent Office / Office européen des brevets**

(11) **EP 3 495 438 B1**

(12) **EUROPEAN PATENT SPECIFICATION**

(45) Date of publication and mention of the grant of the patent:
**04.05.2022 Bulletin 2022/18**

(21) Application number: **17836950.0**

(22) Date of filing: **01.08.2017**

(51) International Patent Classification (IPC):
**C09D 201/08** (2006.01)     **C09D 7/40** (2018.01)
**B32B 15/092** (2006.01)     **C23C 26/00** (2006.01)
**C09D 5/25** (2006.01)     **C09D 163/10** (2006.01)

(52) Cooperative Patent Classification (CPC):
(C-Sets available)
**B32B 15/092; C08G 59/1494; C08G 59/4028; C08G 59/5046; C08G 59/5086; C09D 163/00; C09D 201/08; C23C 26/00**     (Cont.)

(86) International application number:
**PCT/JP2017/027854**

(87) International publication number:
**WO 2018/025846 (08.02.2018 Gazette 2018/06)**

(54) **ELECTROMAGNETIC STEEL SHEET COATED WITH INSULATING FILM, PROCESS FOR PRODUCING SAME, AND COATING MATERIAL FOR FORMING INSULATING FILM**

ELEKTROMAGNETISCHES STAHLBLECH MIT ISOLIERFILM, VERFAHREN ZUR HERSTELLUNG DAVON UND BESCHICHTUNGSMATERIAL ZUR HERSTELLUNG EINES ISOLIERFILMS

TÔLE D'ACIER ÉLECTROMAGNÉTIQUE REVÊTUE D'UN FILM ISOLANT, PROCÉDÉ POUR SA PRODUCTION ET MATÉRIAU DE REVÊTEMENT POUR LA FORMATION D'UN FILM ISOLANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2016 JP 2016152980**

(43) Date of publication of application:
**12.06.2019 Bulletin 2019/24**

(73) Proprietor: **JFE Steel Corporation**
**Tokyo, 100-0011 (JP)**

(72) Inventors:
• **NAKAGAWA Nobuko**
  **Tokyo 100-0011 (JP)**
• **MURAMATSU Naoki**
  **Tokyo 100-0011 (JP)**
• **TADA Chiyoko**
  **Tokyo 100-0011 (JP)**
• **NAKAMURA Kengo**
  **Otawara-shi**
  **Tochigi 324-8516 (JP)**
• **SUGISHITA Tomonori**
  **Otawara-shi**
  **Tochigi 324-8516 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 821 523     WO-A1-2015/029828**
**WO-A1-2015/075792     JP-A- H10 110 273**
**JP-A- 2007 197 824     JP-A- 2010 529 282**
**JP-A- 2013 209 739**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 163/00**

**Description**

TECHNICAL FIELD

The present invention aims at providing an electrical steel sheet with an insulating coating having an excellent hardness which is suitable for a material for iron cores of large generators, as well as a method of manufacturing the same.

BACKGROUND ART

Electrical steel sheets, as being high in efficiency of conversion from electric energy to magnetic energy, are widely used for iron cores of electrical machinery and apparatus including a generator, a transformer, and a motor for household electric appliances. Such an iron core as above is generally formed by stacking multiple electrical steel sheets having been subjected to press forming so as to yield them a desired shape by blanking.

While it is important for the improvement in energy conversion efficiency to reduce a laminated core in core loss, a local eddy current generated by a short circuit between the stacked steel sheets may increase core loss. For this reason, the electrical steel sheet to be used as a material for laminated cores generally has an insulation coating formed on its surface. As a result, a laminate of steel sheets is improved in interlaminar insulation resistance, with occurrence of a short circuit between the stacked steel sheets being suppressed, which reduces local eddy currents, and core loss eventually.

Nowadays, an iron core as a laminate of electrical steel sheets finds applications in a diversity of fields, and in recent years, such an iron core is aggressively applied to a large generator, or a wind power generator along with the growth and expansion of the clean energy industry, in particular. There, however, are several points of consideration in the application of an iron core with electrical steel sheets stacked together to a large generator or a wind power generator.

First of all, an iron core of a large generator or a wind power generator must handle high voltages. Accordingly, the electrical steel sheets to be used as a material for the iron core of a large generator or a wind power generator should have a larger interlaminar insulation resistance value than that required of electrical steel sheets used as a material for an iron core of a small motor for household electric appliances. To be more specific: Electrical steel sheets constituting an iron core of a large generator or a wind power generator should have an interlaminar insulation resistance value exceeding about 300 $\Omega \cdot cm^2$/sheet as measured in accordance with JIS C 2550 (2000), "9. Interlaminar Insulation Resistance Testing" (Method A). Dielectric breakdown characteristics allowing an iron core to handle high voltages are also necessary.

Further, in a case where an iron core is applied to a facility used outdoors or on the sea, such as a wind power generator in particular, the iron core is exposed to a high-temperature environment or a wet environment. Therefore, the electrical steel sheets to be used as a material for such an iron core should have a high interlaminar insulation resistance even after being kept in a high-temperature environment or in a wet environment.

Further, a large iron core to be used for a large generator or a wind power generator is often assembled by manually stacking electrical steel sheets as a core material. In that case, scuffing (caused by contact with the end face of the electrical steel sheet) may occur in an insulation coating by manual handling. Here, the scuffing caused in the insulation coating may cause decrease in interlaminar insulation resistance, so the insulation coating should have a hardness which is capable of suppressing scuffing caused by manual handling.

In order to cope with the above points, various techniques have already been proposed, with examples of such known techniques including a technique for applying a varnish composed of an alkyd resin to an electrical steel sheet provided with an insulation coating to a thickness of more than 5 $\mu$m and drying the applied varnish, and the method of forming an electrical insulation coating as disclosed in Patent Literature 1 in which a resin-based treatment solution prepared by combining a resin varnish with one or both of molybdenum disulfide and tungsten disulfide is applied to an electrical steel sheet, then baked so as to obtain an insulation coating with a thickness of 2 to 15 $\mu$m. The exemplary techniques as above aim at improving the interlaminar insulation resistance by forming a varnish coating of higher insulation quality on top of an insulation coating provided on an electrical steel sheet, and by forming an insulation coating containing a varnish on an electrical steel sheet, respectively, in view of the fact that an adequate interlaminar insulation resistance cannot be ensured by insulation coatings of the electrical steel sheets with insulation coatings to be used for small motors for household electric appliances.

In this connection, an insulation coating adapted for electrical steel sheets may be an inorganic coating or a semiorganic coating apart from the varnish coating and the insulation coating containing a varnish as described above. Such insulation coatings are excellent in heat resistance and hardness as compared with the varnish coating and the insulation coating containing a varnish as above. Among others, inorganic coatings have much excellent heat resistances and hardnesses. Inorganic coatings, however, are inferior in insulation quality to the varnish coating and the insulation coating containing a varnish and cannot ensure an interlaminar insulation resistance required of a material for the iron core of a large generator or a wind power generator. Moreover, inorganic coatings exhibit a lower blanking workability during the blanking of an electrical steel sheet into a desired shape.

Semiorganic coatings are higher in insulation quality than inorganic ones, and Patent Literature 2, for instance, has proposed an electrical steel sheet having a varnish-free, semiorganic coating, namely an insulation coating containing an inorganic compound and an organic resin, formed thereon. The inorganic compound includes an oxide sol composed of at least one selected from among silica sol, alumina sol, titania sol, antimony sol, tungsten sol and molybdenum sol, boric acid, and a silane coupling agent, and is contained at a solid content ratio of more than 30 mass% but less than 90 mass%, while the organic resin includes at least one selected from among acrylic resin, styrene resin, silicone resin, polyester resin, urethane resin, polyethylene resin, polyamide resin, phenol resin and epoxy resin. The insulation coating is made to contain more than 2 parts by mass but less than 40 parts by mass of boric acid and not less than 1 part by mass but less than 15 parts by mass of the silane coupling agent for every 100 parts by mass of the oxide sol in terms of solid content.

CITATION LIST

PATENT LITERATURE

PATENT LITERATURE 1: JP 60-70610
PATENT LITERATURE 2: JP 2009-235530
PATENT LITERATURE 3: JP 2013-209739
PATENT LITERATURE 4: EP2821523

Insulation coatings have been improved by the exemplary techniques as above so as to have excellent heat resistance, moisture resistance and hardness which are suitable for a material for the iron core of a large generators or a wind power generator, but the insulation coatings are insufficient in performance to be used as iron cores for large generators whose increases in size and efficiency have been encouraged in recent years.

Neither the varnish coating as above nor the insulation coating containing a varnish as proposed by Patent Literature 1 has an adequate hardness. As a result, during assembly of an iron core by manually stacking electrical steel sheets as a core material, scuffing caused in the handling cannot be prevented, that is to say, the interlaminar insulation resistance characteristics are made unstable, which causes unevenness in the characteristics among products.

The semiorganic coating as proposed by Patent Literature 2, which contains an inorganic compound including an oxide sol, boric acid and a silane coupling agent, and contains an organic resin as well, exhibits indeed a more excellent heat resistance than both the varnish coating and the insulation coating containing a varnish, but its heat resistance is not adequate yet for the application to a material for the iron core of a large generator or a wind power generator, with deterioration in insulation quality being observed after the coating is kept at high temperatures.

If a desired interlaminar insulation resistance is to be ensured using the technique as proposed by Patent Literature 2, the insulation coating should considerably be increased in coating weight, so that the interlaminar insulation resistance is hard to improve without deterioration of any other property (adhesion property of the insulation coating).

The technique as proposed by Patent Literature 3 proposes an insulation coating having excellent heat resistance, but the hardness of the proposed insulation coating is still not adequate for use in a large generator whose increases in size and in efficiency have been required at a higher level in recent years, so during production of iron cores, scuffing is caused by manual handling, which causes unevenness in the characteristics among products.

Patent Literature 4 relates to a coating material for forming an insulation coating, containing apart from a solvent: an aqueous carboxy group-containing resin as component (A) in an amount of 100 parts by mass in terms of solid content; an aluminum-containing oxide as component (B) in an amount of more than 40 parts by mass but less than 150 parts by mass in terms of solid content, based on the component (A) present in an amount of 100 parts by mass in terms of solid content; at least one crosslinking agent as component (C) selected from the group consisting of melamine, isocyanate and oxazoline, in an amount of more than 20 parts by mass but less than 100 parts by mass in terms of solid content, based on the component (A) present in an amount of 100 parts by mass in terms of solid content, and optionally a titanium-containing oxide as component (D) in an amount of more than 10 parts by mass but not more than 150 parts by mass in terms of solid content, based on said component (A) present in an amount of 100 parts by mass in terms of solid content. The aqueous carboxy group-containing resin as component (A) has an acid value of 15 to 45 mg KOH/g.

SUMMARY OF INVENTION

TECHNICAL PROBLEMS

An object of the present invention is to solve the problems with the prior art in an advantageous manner and to provide an electrical steel sheet with an insulation coating having an excellent hardness which is suitable for use as a material for iron cores of large generators, as well as a manufacturing method for such an electrical steel sheet.

SOLUTION TO PROBLEMS

The present invention has been made on the basis of the findings as above, with the gist thereof being as follows.

[1] A coating material for forming an insulation coating, containing, in addition to a solvent:

an aqueous carboxy group-containing resin as component (A) in an amount of 100 parts by mass in terms of solid content;
an aluminum-containing oxide as component (B) in an amount of more than 40 parts by mass but less than 300 parts by mass in terms of solid content, based on the component (A) present in an amount of 100 parts by mass in terms of solid content;
at least one crosslinking agent as component (C) selected from the group consisting of melamine, isocyanate and oxazoline, in an amount of not less than 100 parts by mass but less than 300 parts by mass in terms of solid content, based on the component (A) present in an amount of 100 parts by mass in terms of solid content; and
a titanium-containing oxide as component (D) in an amount of more than 10 parts by mass but less than 300 parts by mass in terms of solid content, based on the component (A) present in an amount of 100 parts by mass in terms of solid content,
wherein the aqueous carboxy group-containing resin as component (A) has an acid value of 15 to 45 mg KOH/g.

[2] A manufacturing method for an electrical steel sheet with an insulation coating, comprising forming an insulation coating on one or both of sides of an electrical steel sheet by applying thereto a coating material containing, in addition to a solvent:

an aqueous carboxy group-containing resin as component (A) in an amount of 100 parts by mass in terms of solid content;
an aluminum-containing oxide as component (B) in an amount of more than 40 parts by mass but less than 300 parts by mass in terms of solid content, based on the component (A) present in an amount of 100 parts by mass in terms of solid content;
at least one crosslinking agent as component (C) selected from the group consisting of melamine, isocyanate and oxazoline, in an amount of not less than 100 parts by mass but less than 300 parts by mass in terms of solid content, based on the component (A) present in an amount of 100 parts by mass in terms of solid content; and
a titanium-containing oxide as component (D) in an amount of more than 10 parts by mass but less than 300 parts by mass in terms of solid content, based on the component (A) present in an amount of 100 parts by mass in terms of solid content,
wherein the aqueous carboxy group-containing resin as component (A) has an acid value of 15 to 45 mg KOH/g.

[3] The manufacturing method for an electrical steel sheet with an insulation coating according to [2], wherein the insulation coating has a coating weight per sheet side of not less than 0.9 g/m$^2$ but not more than 20 g/m$^2$.
[4] An electrical steel sheet with an insulation coating, having an insulation coating formed by the manufacturing method according to [2] or [3].

ADVANTAGEOUS EFFECTS OF INVENTION

The present invention makes it possible to obtain an electrical steel sheet with an insulation coating having an excellent hardness in particular, which is suitable for use as a material for an iron core of a large generator or a wind power generator.

DESCRIPTION OF EMBODIMENTS

In the following, the present invention is described in detail.

The coating material to be used in the invention for forming an insulation coating is initially described.

The inventive coating material to be used in the invention for forming an insulation coating contains: (A) a main resin; (B) an inorganic component; (C) a crosslinking agent; and (D) a titanium-containing oxide. The coating material to be used for forming an insulation coating in the invention is characterized in that it contains: a solvent; (A) an aqueous carboxy group-containing resin; (B) an Al-containing oxide in an amount of more than 40 parts by mass but less than 300 parts by mass in terms of solid content; and (C) at least one crosslinking agent selected from among melamine, isocyanate and oxazoline in an amount of not less than 100 parts by mass but less than 300 parts by mass in terms of solid content, with the amounts of (B) and (C) being specified based on 100 parts by mass of the resin (A) in terms of solid content. The coating material further contains: (D) a Ti-containing oxide as an inorganic component apart from (B) as above in an amount of more than 10 parts by mass but less than 300 parts by mass in terms of solid content, based on the resin (A) present in an amount of 100 parts by mass in terms of solid content. The aqueous carboxy group-containing resin (A) has an acid value of 15 to 45 mg KOH/g.

(A) Aqueous Carboxy Group-Containing Resin

The coating material of the invention contains an aqueous resin as an organic component. An aqueous resin is a general expression for a water dispersible emulsion and a water soluble resin. If a semiorganic coating containing an aqueous resin is formed as an insulation coating, then the volatile organic solvent content of a coating material can be reduced as much as possible. Use of an aqueous resin makes it possible to minimize the generation of a volatile organic solvent during the formation of an insulation coating. The organic component which is an aqueous carboxy group-containing resin reacts, owing to carboxy groups of the resin, with an Al-containing oxide described later to form a reactant having a firmly crosslinked structure.

The aqueous carboxy group-containing resin as above is not particularly limited in type. In other words, any aqueous resin containing carboxy groups is usable, and aqueous resins suitably used as the aqueous carboxy group-containing resin of the invention include a reaction product obtained by polymerizing a modified epoxy resin resulting from the reaction between an epoxy resin (a1) and an amine (a2) with a vinyl monomer component including a carboxy group-containing vinyl monomer (a3).

A modified epoxy resin obtained by modifying the epoxy resin (a1) with the amine (a2) is an aqueous resin as a result of the ring-opening addition reaction between part of epoxy groups of the epoxy resin (a1) and amino groups of the amine (a2). When the epoxy resin (a1) is modified with the amine (a2) into a modified epoxy resin of aqueous nature, it is preferable that the epoxy resin (a1) and the amine (a2) be blended at such a ratio that the amine (a2) is used in an amount of 3 to 30 parts by mass for every 100 parts by mass of the epoxy resin (a1). If the amount of the amine (a2) is not less than 3 parts by mass, polar groups will suffice, so that the coating is not reduced in adhesion property or moisture resistance. If the amount of the amine (a2) is not more than 30 parts by mass, the coating is not reduced in water resistance or solvent resistance.

The epoxy resin (a1) is not particularly limited as long as it is an epoxy resin having an aromatic ring in the molecule. Various known epoxy resins are usable, with specific examples including a bisphenol-type epoxy resin and a novolac-type epoxy resin.

The bisphenol-type epoxy resin is exemplified by a reaction product of a bisphenol with a haloepoxide such as epichlorohydrin or β-methyl epichlorohydrin. Examples of the above bisphenol include: a reaction product of phenol or 2,6-dihalophenol with an aldehyde, or ketone, such as formaldehyde, acetaldehyde, acetone, acetophenone, cyclohexane, and benzophenone; a peroxide of dihydroxyphenyl sulfide; and a product of etherification reaction between hydroquinones.

The novolac-type epoxy resin is exemplified by a product resulting from the reaction of a novolac-type phenol resin synthesized from phenol or cresol with epichlorohydrin.

Glycidyl ethers of polyhydric alcohols, for instance, are also usable as the epoxy resin (a1). Exemplary polyhydric alcohols include 1,4-butanediol, 1,6-hexanediol, trimethylolpropane, cyclohexane dimethanol, a hydrogenated bisphenol (type A, type F), and a polyalkylene glycol having an alkylene glycol structure. The polyalkylene glycol to be used may be any of known polyalkylene glycols including polyethylene glycol, polypropylene glycol, and polybutylene glycol.

The epoxy resin (a1) may also be other known epoxy resin than the glycidyl ethers of polyhydric alcohols as above, namely, polybutadiene diglycidyl ether, for instance. It is also possible to use any of various known epoxidized oils and/or dimeric acid ester with glycidyl in order to impart flexibility to the coating.

Out of the epoxy resins as described above, any one alone or any two or more in combination may appropriately be used as the epoxy resin (a1). From the viewpoint of the adhesion to an electrical steel sheet, use of a bisphenol-type epoxy resin is preferred. The epoxy equivalent of the epoxy resin (a1) depends on the molecular weight of a reaction product finally obtained (aqueous carboxy group-containing resin), while an epoxy equivalent of 100 to 3000 is preferred taking account of the handleability during the production of the reaction product (aqueous carboxy group-containing resin), prevention of gelation, and so forth. If the epoxy resin (a1) has an epoxy equivalent of not less than 100, the crosslinking reaction with a crosslinking agent does not proceed at an excessively high rate, so that the handleability is not degraded. On the other hand, an epoxy equivalent of not more than 3000 neither degrades the handleability during the synthesis (production) of the reaction product (aqueous carboxy group-containing resin) nor causes gelation to be more liable to occur.

The amine (a2) may be any of various known amines. Examples of usable amines include an alkanolamine, an aliphatic amine, an aromatic amine, an alicyclic amine, and an aromatic nuclear-substituted aliphatic amine, from among which at least one may be selected appropriately for use.

The alkanolamine is exemplified by ethanolamine, diethanolamine, diisopropanolamine, di-2-hydroxybutylamine, N-methylethanolamine, N-ethylethanolamine, and N-benzylethanolamine. The aliphatic amine is exemplified by secondary amines such as ethylamine, propylamine, butylamine, hexylamine, octylamine, laurylamine, stearylamine, palmitylamine, oleylamine, and erucylamine.

The aromatic amine is exemplified by toluidines, xylidines, cumidines (isopropylanilines), hexylanilines, nonylanilines, and dodecylanilines. The alicyclic amine is exemplified by cyclopentylamines, cyclohexylamines, and norbornylamines. The aromatic nuclear-substituted aliphatic amine is exemplified by benzylamines and phenethylamines.

The aqueous, modified epoxy resin is polymerized with the vinyl monomer component including the carboxy group-containing vinyl monomer (a3), so as to obtain the aqueous carboxy group-containing resin. To be more specific: Out of the epoxy groups of the aqueous, modified epoxy resin, those which have not reacted with amino groups react with part of the carboxy groups of the vinyl monomer component to yield the aqueous carboxy group-containing resin. During the polymerization as above, a known azo compound may be used as a polymerization initiator.

The carboxy group-containing vinyl monomer (a3) is not particularly limited as long as it is a monomer containing a carboxy group as a functional group, and a polymerizable vinyl group as well, so that any such known monomer is usable. Specific examples of usable monomers include such carboxy group-containing vinyl monomers as (meth)acrylic acid, maleic acid, maleic anhydride, fumaric acid, and itaconic acid. For the improvement in stability upon synthesis and storage stability, a styrene monomer may be used apart from the above (meth)acrylic acid.

When the aqueous, modified epoxy resin as described above is polymerized with the vinyl monomer component including the carboxy group-containing vinyl monomer (a3), so as to obtain the aqueous carboxy group-containing resin, it is preferable that the aqueous, modified epoxy resin and the vinyl monomer (a3) be blended at such a ratio that the vinyl monomer (a3) is used in an amount of 5 to 100 parts by mass for every 100 parts by mass of the aqueous, modified epoxy resin. The coating is not reduced in moisture resistance if the amount of the vinyl monomer (a3) is 5 parts by mass or higher, while not reduced in water resistance or solvent resistance if the amount of the vinyl monomer (a3) is 100 parts by mass or lower. An amount of 80 parts by mass or lower is more preferable.

In the coating material of the invention, the acid value based on solid content (hereinafter, referred to as solid acid value) of the aqueous carboxy group-containing resin (A) is 15 to 45 mg KOH/g.

As described later, the most distinctive feature of the present invention is that a reactant having a firm network structure (firmly crosslinked structure) is formed between the aqueous carboxy group-containing resin (A) as an organic component and the Al-containing oxide (B) as an inorganic component by the ester linkage between the carboxy groups of the resin (A) and hydroxy groups coordinated on the surface of alumina or alumina-coated silica, namely, the oxide (B). It is thus preferable that the aqueous carboxy group-containing resin to be contained in the coating material of the invention have a desired carboxy group contributing to the reaction with the Al-containing oxide.

If the solid acid value of the aqueous carboxy group-containing resin is not less than 15 mg KOH/g, the carboxy groups as contained in the aqueous carboxy group-containing resin will suffice, so that the reaction (ester linkage) with the Al-containing oxide occurs adequately, with effects owing to the firm network structure (firmly crosslinked structure) as above being fully achieved. If the solid acid value of the aqueous carboxy group-containing resin is not more than 45 mg KOH/g, the aqueous carboxy group-containing resin will not contain carboxy groups to excess and, accordingly, not be degraded in stability. For this reason, the solid acid value of the aqueous carboxy group-containing resin falls within the range of 15 to 45 mg KOH/g. Preferably, the value falls within the range of 20 to 40 mg KOH/g.

During the preparation of the aqueous carboxy group-containing resin (A), the solvent to be used is water from the viewpoint that a vinyl-modified epoxy resin finally obtained (namely, aqueous carboxy group-containing resin) will have been made aqueous. If water is to be replaced, it is desirable to use a hydrophilic solvent in a small amount. Specific examples of usable hydrophilic solvents include: glycol ethers such as propylene glycol monomethyl ether, propylene glycol monoethyl ether, propylene glycol mono-n-butyl ether, propylene glycol mono-t-butyl ether, dipropylene glycol monomethyl ether, methyl cellosolve, ethyl cellosolve, n-butyl cellosolve, and t-butyl cellosolve; and alcohols such as isopropyl alcohol and butyl alcohol. Out of the hydrophilic solvents as above, at least one may be selected appropriately for use. The amount of hydrophilic solvent or solvents used is preferably 5 to 20% by mass of the entire coating material. An amount falling within this range will cause no problems with the storage stability.

The neutralizer to be used during the preparation of the aqueous carboxy group-containing resin (A) may be any of various known amines. Examples of usable amines include an allkanolamine, an aliphatic amine, an aromatic amine, an alicyclic amine, and an aromatic nuclear-substituted aliphatic amine, from among which at least one may be selected appropriately for use. Among others, alkanolamines such as monoethanolamine, diethanolamine, monoisopropanolamine, diisopropanolamine, N-methylethanolamine, and N-ethylethanolamine allow a good stability of the resin as made aqueous, that is to say, are suitable for use. The pH of the solution is preferably adjusted to 6 to 9 by the addition of a neutralizer.

(B) Al-Containing Oxide

The coating material of the invention contains an Al-containing oxide as an inorganic component. The Al-containing oxide forms a reactant having a firmly crosslinked structure along with the aqueous carboxy group-containing resin (A) as described above and is, accordingly, a component very important for the improvement in heat resistance of an insulation coating formed. In general, Al-containing oxides are of low costs and have high insulation qualities effective at improving an insulation coating formed in insulation quality. The Al-containing oxide to be used is not particularly limited in type, that is to say, any of known Al-containing oxides varied in type is usable, with examples including alumina (alumina sol), alumina-coated silica, and kaolinite. Such usable Al-containing oxides may not only be used alone but in combination of appropriate two or more out of them.

The coating material of the invention contains more than 40 parts by mass but less than 300 parts by mass of the Al-containing oxide (B) in terms of solid content, based on 100 parts by mass of the aqueous carboxy group-containing resin (A) in terms of solid content. If the amount of the Al-containing oxide is not more than 40 parts by mass in terms of solid content, based on 100 parts by mass of the aqueous carboxy group-containing resin in terms of solid content, an insulation coating formed will be reduced in adhesion property (adhesion to an electrical steel sheet), which leads to remarkable deterioration of an insulation quality and deterioration of a corrosion resistance as well. On the other hand, if the amount of the Al-containing oxide is not less than 300 parts by mass in terms of solid content, based on 100 parts by mass of the aqueous carboxy group-containing resin in terms of solid content, uniform dispersion of the Al-containing oxide in the coating material becomes difficult, which may adversely affect the appearance of an insulation coating formed of the coating material. Therefore, the Al-containing oxide is contained in the coating material of the invention in an amount of more than 40 parts by mass but less than 300 parts by mass in terms of solid content, based on 100 parts by mass of the aqueous carboxy group-containing resin in terms of solid content. An amount of 50 to 90 parts by mass or an amount of 100 to 200 parts by mass is preferred. If the amount is 50 to 90 parts by mass, excellent scratch resistance can be obtained by the effect of minimization of an area of an interface between an oxide and a resin that is to be a breakdown starting point in a coating. If the amount is 100 to 200 parts by mass, a coating is less likely to deform in a high-temperature and compressive environment required in the application to a large generator, and excellent compressibility at high temperatures can be obtained.

The Al-containing oxide (B) is exemplified by alumina (alumina sol), alumina-coated silica, and kaolinite.

Alumina (alumina sol) is preferably 5 to 100 nm in mean particle size if it is particulate, while 50 to 200 nm in length if it is not particulate but fibrous, taking the mixture quality of the coating material and the appearance of the formed coating into consideration. Alumina (alumina sol) with sizes not falling within these ranges may be hard to mix uniformly in the coating material and, as a consequence, may adversely affect the appearance of an insulation coating formed of the coating material. In addition, alumina (alumina sol) needs to be used keeping its pH in mind because the sol is reduced in dispersion stability at pH values of more than 8.

Alumina-coated silica is a mixture of alumina and silica, and it is preferable from the viewpoint of heat resistance or stability that alumina be localized on the surface of silica. The particle size of alumina-coated silica is preferably specified to be 1 to 30 $\mu$m from the viewpoint of stability or appearance properties. The alumina content is preferably not less than 10% by mass from the viewpoint of heat resistance. Kaolinite (kaolin) is the clay mineral which is composed of a hydrous silicate of aluminum and which has such a composition that alumina and silica are contained therein, so that it is usable as the Al-containing oxide of the invention. The particle size of kaolinite is preferably specified to be 1 to 30 $\mu$m from the viewpoint of stability or appearance properties.

While it is the most distinctive feature of the coating material of the invention that it contains the Al-containing oxide (B) as an inorganic component, any additional inorganic component may be contained as long as it does not impair the effects of the invention. An inorganic component used in the invention may contain Hf, $HfO_2$, and $Fe_2O_3$ as impurities. Such impurities are acceptable if the amount thereof is not more than 10 parts by mass, based on 100 parts by mass of the aqueous carboxy group-containing resin (A) in terms of solid content.

When an insulation coating is formed using the coating material containing the aqueous carboxy group-containing resin (A) and the Al-containing oxide (B) as described above, the carboxy groups of the aqueous carboxy group-containing resin (A) undergo the ester linkage with hydroxy groups coordinated on the surface of the Al-containing oxide (B) that is caused by the heating at a temperature of 120°C or higher, so as to form a reactant having a firm network structure (firmly crosslinked structure) between the aqueous carboxy group-containing resin (A) as an organic component and the Al-containing oxide (B) as an inorganic component.

To be more specific: In the case where the epoxy resin (a1) is modified with the amine (a2) into a modified epoxy resin of aqueous nature, and the aqueous, modified epoxy resin thus obtained is polymerized with the vinyl monomer component including the carboxy group-containing vinyl monomer (a3), so as to obtain the aqueous carboxy group-containing resin, those out of the carboxy groups of the vinyl monomer component which have not reacted with epoxy groups undergo ester linkage (half esterification) with the hydroxy groups as coordinated on the surface of the Al-containing oxide, to thereby form a reactant having a network structure (crosslinked structure).

The reactant having a firm network structure (firmly crosslinked structure) remarkably improves an insulation coating in heat resistance and waterproofing properties (barrier properties), so that the insulation coating has excellent interlaminar insulation resistance and other properties even after being kept at high temperatures or in a wet environment.

Conventionally, silica finds wide application as an inorganic component of a coating material for forming insulation coatings. If, however, silica is used alone as an inorganic component, with no Al-containing oxides being combined therewith, desired waterproofing properties (barrier properties) are not obtained, and various properties including excellent interlaminar insulation resistance cannot adequately be ensured after the formed insulation coating is kept in a wet environment.

(C) At Least One Crosslinking Agent Selected from among Melamine, Isocyanate and Oxazoline

A crosslinking agent is added to the coating material in order to crosslink the aqueous carboxy group-containing resin (A) and thereby improve an insulation coating formed in adhesion to an electrical steel sheet. To the coating material of the invention, at least one crosslinking agent selected from among melamine, isocyanate and oxazoline is applied. Since melamine, isocyanate and oxazoline are each of thermosetting nature, application of such a crosslinking agent makes it possible to impart a desired heat resistance to an insulation coating.

The coating material of the invention contains at least one crosslinking agent (C), which is selected from among melamine, isocyanate and oxazoline, in an amount of not less than 100 parts by mass but less than 300 parts by mass in terms of solid content, based on 100 parts by mass of the aqueous carboxy group-containing resin (A) in terms of solid content. A firm network with the aqueous carboxy group-containing resin (A) is formed and the scuff resistance and the compressibility at high temperatures are improved by containing at least one crosslinking agent (C), which is selected from among melamine, isocyanate and oxazoline, in an amount of not less than 100 parts by mass but less than 300 parts by mass in terms of solid content, based on 100 parts by mass of the aqueous carboxy group-containing resin (A) in terms of solid content. If the amount of the crosslinking agent is less than 100 parts by mass in terms of solid content, based on 100 parts by mass of the aqueous carboxy group-containing resin in terms of solid content, an insulation coating formed will have inadequate formability, scuff resistance and compressibility at high temperatures.

If the amount of the crosslinking agent is not less than 300 parts by mass in terms of solid content, based on 100 parts by mass of the aqueous carboxy group-containing resin in terms of solid content, the crosslinking agent may remain behind in an insulation coating formed, and the insulation coating formed will have an inadequate scuff resistance and compressibility at high temperatures. Such high amounts are undesirable because the crosslinking agent remaining in an insulation coating deteriorates the boiling water resistance (resistance to the exposure to boiling steam) of the coating, with rusting becoming more liable to occur. In addition, the coating is reduced in formability and adhesion property as a result of the increase in crosslink density. For this reason, the crosslinking agent as above is to be contained in an amount of not less than 100 parts by mass but less than 300 parts by mass in terms of solid content, based on 100 parts by mass of the aqueous carboxy group-containing resin in terms of solid content. An amount of 100 to 200 parts by mass is preferred, with an amount of 100 to 150 parts by mass being more preferred.

It should be noted that, if used as a crosslinking agent, an isocyanate is preferably mixed into the coating material immediately before use because of its reactivity in an aqueous coating material.

As described above, the coating material of the invention contains: the aqueous carboxy group-containing resin (A) in an amount of 100 parts by mass in terms of solid content; the Al-containing oxide (B) in an amount of more than 40 parts by mass but less than 300 parts by mass in terms of solid content, based on 100 parts by mass of the resin (A) in terms of solid content; and at least one crosslinking agent (C) selected from among melamine, isocyanate and oxazoline in an amount of not less than 100 parts by mass but less than 300 parts by mass in terms of solid content, based on 100 parts by mass of the resin (A) in terms of solid content. The inventive coating material as such makes it possible to form an insulation coating much excellent in hardness and, moreover, form an insulation coating having a specified coating weight with ease using a conventional application apparatus such as a coater.

(D) Ti-Containing Oxide

The coating material containing the Ti-containing oxide (D) is effective in ensuring scuff resistance of an insulation coating. A hard insulation coating can be formed by adding a Ti-containing oxide to the coating material. Consequently, the inventive coating material as made to contain not only an Al-containing oxide but a Ti-containing oxide solves the problem which lies in a conventional assembly of an iron core by manually stacking electrical steel sheets, namely, the problem of reduction in interlaminar insulation resistance of the electrical steel sheets due to the scuffing of an insulation coating by manual handling.

The Ti-containing oxide to be used is not particularly limited in type but may be any of various known Ti-containing oxides, with suitable oxides for use being exemplified by titania (rutile-type). In view of the hardening of an insulation coating, it is preferable to select melamine as the crosslinking agent.

The Ti-containing oxide (D) is present in the material in an amount of more than 10 parts by mass but less than 300 parts by mass in terms of solid content, based on 100 parts by mass of the aqueous carboxy group-containing resin (A) in terms of solid content. The appearance of the coated steel sheet will get rid of yellowing, that is to say, be in a uniform, white-like color with the amount of the Ti-containing oxide being more than 10 parts by mass in terms of solid content, based on 100 parts by mass of the aqueous carboxy group-containing resin in terms of solid content. On the other hand, the insulating quality of the coated steel sheet does not deteriorate with the amount of the Ti-containing oxide being not more than 300 parts by mass in terms of solid content, based on 100 parts by mass of the aqueous carboxy group-containing resin in terms of solid content. Thus, the Ti-containing oxide is contained in the coating material of the invention in an amount of more than 10 parts by mass but less than 300 parts by mass in terms of solid content, based on 100 parts by mass of the aqueous carboxy group-containing resin in terms of solid content. Further, the amount of the Ti-containing oxide contained in the coating material of the invention is preferably not less than 30 parts by mass but not more than 250 parts by mass, more preferably not less than 30 parts by mass but not more than 100 parts by mass, and most preferably not less than 30 parts by mass but not less than 70 parts by mass.

The above-mentioned titania is preferably dispersed at a mean particle size of 5 to 50 $\mu$m. A mean particle size of not less than 5 $\mu$m yields a moderate specific surface area, so that the stability is not reduced. A mean particle size of not more than 50 $\mu$m causes no coating defects.

In the coating material of the invention, it is only essential that the above components (A), (B), (C), and (D) are contained in a solvent at a desired blending ratio, and the inventive coating material may contain any additional component as long as it does not impair the effects of the invention. Examples of usable additional components include those to be added in order to further improve a coating in performance or uniformity, such as a surfactant, a rust-preventive agent, a lubricant, and an antioxidant. Known color pigments and extender pigments are also usable as long as they do not deteriorate the coating performance. It is preferable from the viewpoint of keeping the coating performance adequate that additional components are blended into the coating material such that they comprise not more than 10% by mass of a coating on a dry weight basis.

The coating material of the invention is preferably prepared as follows: To part of an aqueous carboxy group-containing resin provided, an Al-containing oxide, optionally along with a Ti-containing oxide, as well as water, a hydrophilic solvent, and a defoaming agent are added, and the resultant mixture is placed in a disperser to obtain a uniform dispersion. Using a dispersion medium, a specified particle size (of not more than 30 $\mu$m, preferably not more than 20 $\mu$m as determined with a fineness gage) is imparted to the Al-containing oxide, and optionally to the Ti-containing oxide as well. The rest of the aqueous carboxy group-containing resin and a crosslinking agent were then added and dispersed to complete the dispersion. To the dispersion thus obtained, a leveling agent, a neutralizer, and water are further added for the improvement in film forming characteristics, so as to obtain the coating material. The coating material preferably has a solid content of 40 to 55% by mass. A solid content falling within this range allows a high storage stability and excellent coating work properties.

Next described is the manufacturing method for an electrical steel sheet with an insulation coating according to the present invention.

The inventive manufacturing method for an electrical steel sheet with an insulation coating is characterized by the step of forming an insulation coating on one side or both sides of an electrical steel sheet by applying thereto the coating material as described above.

The electrical steel sheet to be used in the invention as a substrate may be a so-called soft iron sheet (electrical iron sheet) with a high magnetic flux density, a cold-rolled general steel sheet such as SPCC as defined in JIS G 3141 (2009), or a non-oriented electrical steel sheet having Si or Al added thereto for the improvement in specific resistance. The pretreatment to be conducted on the electrical steel sheet is not particularly limited and may also be omitted indeed, but degreasing with an alkali, and pickling with hydrochloric acid, sulfuric acid or phosphoric acid are preferably conducted.

During the formation of an insulation coating on an electrical steel sheet using the coating material as described above, the conventional method, in which a coating material is applied onto the electrical steel sheet surface and then subjected to baking, may be employed, for instance. The coating material as above may be applied onto the electrical steel sheet surface by an application method in industrially common use, namely, a method using any of various instruments, such as a roll coater, a flow coater, a spray coater, a knife coater and a bar coater, to apply a coating material onto an electrical steel sheet. Baking of the coating material as applied onto an electrical steel sheet is not particularly limited in method, either, so that any of conventional baking methods using hot air, infrared heating or induction heating is usable. In this regard, the baking temperature may be specified within a conventional range of, for instance, 150 to 350°C as the maximum end-point temperature for steel sheet. In order to avoid the discoloration of a coating due to the thermal decomposition of an organic component (aqueous carboxy group-containing resin) contained in the coating material, it is preferable to specify the maximum end-point temperature for steel sheet to be not more than 350°C, more preferably to be 150 to 350°C. The present inventors found that a coating has an improved scratch resistance if the maximum end-point temperature for steel sheet is not less than 300°C. A temperature of 300 to 350°C is even more preferred. The baking time (time to reach the maximum end-point temperature for steel sheet as above) is preferably about 10 to 60 seconds.

An insulation coating made of the coating material as described above may be formed on one side or both sides of an electrical steel sheet. It may be determined as appropriate to various properties required of the electrical steel sheet or an intended use thereof whether an insulation coating is formed on one side or both sides of the electrical steel sheet. It is also possible to form an insulation coating of the above coating material on one side of an electrical steel sheet and that of another coating material on the other side.

With respect to the coating weight of an insulation coating, it is preferable in order to impart desired properties to an electrical steel sheet that the coating weight per sheet side, which is expressed as the total mass of all the components that is converted into the total mass of the solids in the coating (hereafter referred to as "total solid mass"), is 0.9 to 20 g/m$^2$. A coating weight per sheet side of not less than 0.9 g/m$^2$ makes it possible to ensure a desired insulation quality (interlaminar insulation resistance). Moreover, if an insulation coating with a coating weight per sheet side of not less than 0.9 g/m$^2$ is to be formed, it is readily possible to uniformly apply the coating material onto the electrical steel sheet surface, which allows the electrical steel sheet with the insulation coating as formed thereon to have stable blanking workability and corrosion resistance. On the other hand, a coating weight per sheet side of not more than 20 g/m$^2$ makes it possible to prevent the reduction of the insulation coating in adhesion to an electrical steel sheet or the blistering during baking performed after the coating material is applied onto the electrical steel sheet surface, so that the coating quality is kept favorable. It is thus preferable that the coating weight of an insulation coating is 0.9 to 20 g/m$^2$ per sheet side. A coating weight per sheet side of 1.5 to 15 g/m$^2$ is more preferred. A coating weight per sheet side of 7 to 11 g/m$^2$ is most preferred.

The solid mass of an insulation coating may be measured by subjecting an electrical steel sheet with an insulation coating to treatment with a hot alkali so as to dissolve the insulation coating alone, and determining the change from the weight before the dissolution of the insulation coating to that after the dissolution (weight-based method). In the case where the coating weight of an insulation coating is low, the weight of the insulation coating may be determined from a calibration curve between the counting by fluorescent X-ray analysis of a specified element constituting the insulation coating and the weight-based method (alkali peeling method) as above.

The electrical steel sheet with an insulation coating that is provided with a specified insulation coating formed according to the inventive manufacturing method for an electrical steel sheet with an insulation coating exhibits a much excellent interlaminar insulation resistance even after being kept at high temperatures or a wet environment because it is provided with an insulation coating having an aqueous carboxy group-containing resin and an Al-containing oxide each contained in the coating in a desired amount. In other words, a firm network structure (firmly crosslinked structure) is formed between the aqueous carboxy group-containing resin as an organic component and the Al-containing oxide as an inorganic component by the ester linkage between the carboxy groups of the aqueous carboxy group-containing resin and hydroxy groups coordinated on the surface of the Al-containing oxide, so that an insulation coating obtained has much excellent heat resistance and barrier properties. Further, an insulation coating having a proper crosslink density can be obtained, so the insulation coating is excellent in adhesion property, formability, and scuff resistance.

According to the present invention, it is thus possible to obtain the electrical steel sheet with an insulation coating that is excellent in corrosion resistance, blanking workability, insulation quality (interlaminar insulation resistance), heat resistance, and adhesion of an insulation coating to the electrical steel sheet, and that has a much excellent interlaminar insulation resistance even after being kept at high temperatures or a wet environment.

The electrical steel sheet with an insulation coating according to the present invention may be provided with an insulation coating further containing a Ti-containing oxide. As described before, a Ti-containing oxide effectively contributes to the hardening of an insulation coating, that is to say, is significantly effective at solving the problem of reduction in interlaminar insulation resistance of an electrical steel sheet due to the scuffing of an insulation coating by manual handling during the manual stacking of electrical steel sheets, for instance.

The insulation coating of the inventive electrical steel sheet with an insulation coating is formed using the coating material which contains the aqueous carboxy group-containing resin (A), the Al-containing oxide (B), and the crosslinking agent or agents (C) selected from among melamine, isocyanate and oxazoline, and further contains the Ti-containing oxide (D). In other words, the insulation coating of the invention is formed of the coating material which contains the crosslinking agent or agents (C) adapted to crosslink the aqueous carboxy group-containing resin (A). If the crosslinking agent or agents remain behind in an insulation coating finally obtained, the coating deteriorates in boiling water resistance (resistance to the exposure to boiling steam), with rusting becoming more liable to occur. Consequently, it is preferable that, in a process for forming an insulation coating on the electrical steel sheet surface using the coating material as above, the amount of the crosslinking agent or agents (C) selected from among melamine, isocyanate and oxazoline and contained in the coating material be adjusted in accordance with the maximum end-point temperature for steel sheet during the baking as described before so that non-reacted crosslinking agent or agents may not remain behind.

EXAMPLES

Effects of the present invention are illustrated in reference to the following Examples, to which the present invention is in no way limited.

[Example 1]

Test sheets were manufactured by the method as described below so as to analyze insulation coatings and evaluate electrical steel sheets with insulation coatings with respect to the insulation quality, the heat resistance, the moisture resistance, the corrosion resistance, the adhesion property, the blanking workability and the coating appearance.

1. Manufacturing of Test Sheet

(1.1) Sample Sheet

Sample sheets were provided by cutting a non-oriented electrical steel sheet of 0.5 mm in thickness, 50A230 as defined in JIS C 2552 (2000), into pieces each having measured 150 mm wide and 300 mm long.

(1.2) Pretreatment

The electrical steel sheet as a substrate material was immersed in an aqueous sodium orthosilicate solution (with a concentration of 0.8% by mass) at a normal temperature for 30 seconds, then rinsed with water and dried.

(1.3) Preparation of Aqueous Carboxy Group-Containing Resin (A)

The aqueous carboxy group-containing resins (A) as listed in Table 1 along with their ingredients were prepared in accordance with the following procedure. An epoxy resin (a1) was melted at 100°C, and an amine (a2) was added to the melted resin and reacted therewith for five hours, so as to obtain a polymerizable, amine-modified epoxy resin. To the polymerizable, amine-modified epoxy resin thus obtained, a mixture of a carboxy group-containing vinyl monomer (a3), a solvent (isopropyl cellosolve) and a polymerization initiator was added for one hour, and the resultant reaction mixture was kept at 130°C for four hours. Then, the mixture was cooled to 80°C, and received a neutralizer (diethanolamine), a hydrophilic solvent (butyl cellosolve), and water mixed thereinto in this order to thereby yield the relevant aqueous carboxy group-containing resin (A) with a solid content of 30% by mass. The obtained aqueous carboxy group-containing resins (A) had the solid acid values (mg KOH/g) and pH values as set forth in Table 1. In Table 1, the amounts of an amine (a2) and a carboxy group-containing vinyl monomer (a3) are each expressed as parts by mass, based on 100 parts by mass of an epoxy resin (a1).

[Table 1]

| Resin *1 | Component of aqueous carboxy group-containing resin (A) | | | | | | | | Acid value (mgKOH/ g) | pH |
| --- | --- | --- | --- | --- | --- | --- | --- | --- | --- | --- |
| | Epoxy resin (a1) | | | Amine (a2) | | Carboxy group-containing vinyl monomer (a3) | | | | |
| | Type | Parts by mass *2 | Epoxy equivalent | Type | Parts by mass *2 | Type | Parts by mass *2 | Carboxy group equivalent *3 | | |
| A1 | Bisphenol A-type epoxy resin | 100 | 200 | Dibutylamine | 12 | Acrylic acid | 10 | 0.3 | 20 | 8.5 |
| | | | | | | Styrene | 7 | | | |
| A2 | Bisphenol A-type epoxy resin | 100 | 400 | Dibutylamine | 12 | Acrylic acid | 5 | 0.6 | 40 | 8.2 |
| | | | | | | Maleic acid | 5 | | | |
| | | | | | | Styrene | 1 | | | |
| A3 | Bisphenol A-type epoxy resin | 100 | 500 | Dibutylamine | 12 | Acrylic acid | 7 | 0.7 | 18 | 8.6 |
| | | | | | | Itaconic acid | 3 | | | |
| | | | | | | Styrene | 5 | | | |
| | | | | | | Butyl acrylate | 4 | | | |

*1) Aqueous carboxy group-containing resin (A).
*2) In terms of solid content.
*3) Carboxy group equivalent for every one equivalent of epoxy groups in aqueous, modified epoxy resin.

(1.4) Preparation of Coating Material for Forming Insulation Coating

The aqueous carboxy group-containing resins (A) as obtained in (1.3) above were each mixed with an Al-containing oxide (B), a crosslinking agent (C), and optionally further with a Ti-containing oxide (D) in accordance with the following procedure so as to prepare coating materials having the chemical compositions (in terms of solid content) as set forth in Table 3.

To part of an aqueous carboxy group-containing resin (A) provided, an Al-containing oxide (B), optionally along with a Ti-containing oxide (D), as well as water, a hydrophilic solvent (butyl cellosolve) in an amount corresponding to 10% by mass of the entire coating material, and a defoaming agent (SN-defoamer 777 manufactured by San Nopco Ltd.) corresponding to 0.3% by mass of the entire coating material were added, and the resultant mixture was placed in a disperser to obtain a uniform dispersion, whereupon a fineness gage was used to make the Al-containing oxide (B), optionally along with the Ti-containing oxide (D), have a particle size of not more than 20 $\mu$m. The rest of the aqueous carboxy group-containing resin (A) and a crosslinking agent (C) were then added and dispersed to complete the dispersion. For the improvement in film forming characteristics, a leveling agent (byk 348 manufactured by BYK Japan KK) was added to the obtained dispersion in an amount corresponding to 0.3% by mass of the entire coating material, diethanolamine was used as a neutralizer, and water was added so as to modify the solid content. As a consequence, the coating material had a solid content of 45% by mass, with the pH value having been 8.5.

The Al-containing oxide (B) used was kaolinite or alumina-coated silica as set forth in Table 2. These substances each have a primary particle size of about 1 to 5 $\mu$m.

The crosslinking agent (C) as used was a methylated melamine resin MX-035 (with a solid content of 70% by mass) or a mixed etherized melamine resin MX-45 (with a solid content of 100%) as melamine, both manufactured by SANWA Chemical Co., Ltd., DURANATE WB40-80D (with a solid content of 80% by mass) as isocyanate, manufactured by Asahi Kasei Corp., or an oxazoline-containing resin WS-500 (with a solid content of 40% by mass) as oxazoline, manufactured by NIPPON SHOKUBAI CO., LTD.

The Ti-containing oxide (D) as used was titanium oxide (R930; primary particle size, 250 nm) manufactured by ISHIHARA SANGYO KAISHA, LTD.

The types of components (A) through (D) as used and their blending ratios are set forth in Table 3. In Table 3, the amounts of an Al-containing oxide (B), a crosslinking agent (C) and a Ti-containing oxide (D) are each expressed as parts by mass (in terms of solid content), based on 100 parts by mass (in terms of solid content) of an aqueous carboxy group-containing resin (A).

[Table 2]

| Type *4 | Type of alumina | Alumina content (mass%) *5 |
|---|---|---|
| b1 | Kaolinite (Kaoline manufactured by Takehara Chemical Industrial Co., Ltd.) | 36.7 |
| b2 | Alumina-coated silica (NIKKAGEL manufactured by Toshin Chemicals Co., Ltd.) | 12.8 |

*4) Type of Al-containing oxide (B).
*5) Content of alumina in kaolinite or alumina-coated silica (mass%).

[Table 3]

| Coating material No. | Component of coating material | | | | | | | Notes |
|---|---|---|---|---|---|---|---|---|
| | Aqueous carboxy group-containing resin (A) | | Al-containing oxide (B) | | Crosslinking agent (C) | | Ti-containing oxide (D) | |
| | Type | Parts by mass *6 | Type | Parts by mass *6 | Type | Parts by mass *6 | Parts by mass *6 | |
| 1 | A1 | 100 | b1 | 100 | Methylated melamine | 100 | 30 | Example of invention |
| 2 | A2 | 100 | b1 | 250 | Methylated melamine | 150 | 0 | Reference Example |

(continued)

| Coating material No. | Component of coating material | | | | | | | Notes |
|---|---|---|---|---|---|---|---|---|
| | Aqueous carboxy group-containing resin (A) | | Al-containing oxide (B) | | Crosslinking agent (C) | | Ti-containing oxide (D) | |
| | Type | Parts by mass *6 | Type | Parts by mass *6 | Type | Parts by mass *6 | Parts by mass *6 | |
| 3 | A3 | 100 | b1 | 120 | Methylated melamine | 300 | 0 | Reference Example |
| 4 | A2 | 100 | b1 | 110 | Methylated melamine | 100 | 65 | Example of invention |
| 5 | A2 | 100 | b2 | 110 | Methylated melamine | 110 | 0 | Reference Example |
| 6 | A3 | 100 | b1 | 95 | Methylated melamine | 110 | 0 | Reference Example |
| 7 | A3 | 100 | b1 | 85 | Methylated melamine | 110 | 0 | Reference Example |
| 8 | A2 | 100 | b1 | 100 | Methylated melamine | 105 | 80 | Example of invention |
| 9 | A3 | 100 | b1 | 110 | Methylated melamine | 210 | 68 | Example of invention |
| 10 | A3 | 100 | b1 | 150 | Methylated melamine | 200 | 50 | Example of invention |
| 11 | A1 | 100 | b1 | 105 | Methylated melamine | 120 | 0 | Reference Example |
| 12 | A2 | 100 | b1 | 60 | Methylated melamine | 100 | 0 | Reference Example |
| 13 | A3 | 100 | b1 | 80 | Methylated melamine | 110 | 0 | Reference Example |
| 14 | A1 | 100 | b1 | 50 | Methylated melamine | t20 | 0 | Reference Example |
| 15 | A3 | 100 | b1 | 100 | Methylated melamine | <u>80</u> | 30 | Comparative example |
| 16 | A2 | 100 | b1 | 100 | Mixed etherized melamine | <u>350</u> | 20 | Comparative example |
| *6) In terms of solid content. | | | | | | | | |

(1.5) Formation of Insulation Coating (Manufacturing of Test Sheet)

The various coating materials as listed in Table 3 were each applied to one of the sample sheets as obtained by the procedures of (1.1) and (1.2) above, onto the surface thereof (both sides) with a roll coater and baked by a hot-blast baking furnace, then left standing so as to cool them to a normal temperature, with insulation coatings having thus been formed, and test sheets manufactured. The types of the coating materials as used, baking temperatures (end-point temperatures for sample sheet), and heating times to reach the baking temperatures are set forth in Table 4.

2. Analysis of Insulation Coating

(2.1) Weight Ratio between Aqueous Carboxy Group-Containing Resin, Al-Containing Oxide, and Ti-Containing Oxide

The various test sheets as obtained in (1.5) above were used to determine and confirm the weight ratios between the aqueous carboxy group-containing resin, the Al-containing oxide and the Ti-containing oxide as having been contained in the dried insulation coating from a calibration curve between the counting by fluorescent X-ray analysis of a specified element constituting the insulation coating and the weight-based method (alkali peeling method). The results are shown in Table 4.

(2.2) Coating Weight of Insulation Coating

The insulation coatings of the test sheets as obtained in (1.5) above were measured in coating weight (per sheet side) using the weight-based method (alkali peeling method).
The measurements are set forth in Table 4.

[Table 4]

| Test sheet No. | Coating material No. | Baking condition | | Component of insulation coating (mass%) | | | | Costing weight (g/m²) *14 | Notes |
|---|---|---|---|---|---|---|---|---|---|
| | | Baking temperature (°C) *11 | Heating time (s) *12 | Carboxy group-containing resin (A) *13 | Al-containing oxide (B) *13 | Crosslinking agent (C) *13 | Ti-containing oxide (D) *13 | | |
| T1 | 1 | 300 | 30 | 30 | 30 | 30 | 10 | 8.0 | Example of invention |
| T2 | 2 | 300 | 30 | 20 | 50 | 30 | 0 | 9.0 | Reference Example |
| T3 | 3 | 300 | 30 | 19 | 23 | 58 | 0 | 10.0 | Reference Example |
| T4 | 4 | 300 | 30 | 27 | 29 | 27 | 17 | 9.0 | Example of invention |
| T5 | 5 | 300 | 30 | 32 | 34 | 34 | 0 | 8.0 | Reference Example |
| T6 | 6 | 300 | 30 | 33 | 31 | 36 | 0 | 8.0 | Reference Example |
| T7 | 7 | 300 | 30 | 34 | 29 | 37 | 0 | 8.0 | Reference Example |
| T8 | 8 | 300 | 30 | 26 | 26 | 27 | 21 | 7.0 | Example of invention |
| T9 | 9 | 300 | 30 | 20 | 23 | 43 | 14 | 11.0 | Example of invention |
| T10 | 10 | 300 | 30 | 20 | 30 | 40 | 10 | 8.0 | Example of invention |
| T11 | 11 | 300 | 30 | 31 | 32 | 37 | 0 | 10.0 | Reference Example |
| T13 | 12 | 300 | 30 | 38 | 24 | 38 | 0 | 7.0 | Reference Example |
| T13 | 13 | 300 | 30 | 34 | 28 | 38 | 0 | 11.0 | Reference Example |

(continued)

| Test sheet No. | Coating material No. | Baking condition | | Component of insulation coating (mass%) | | | | Costing weight (g/m$^2$) *14 | Notes |
|---|---|---|---|---|---|---|---|---|---|
| | | Baking temperature (°C) *11 | Heating time (s) *12 | Carboxy group-containing resin (A) *13 | Al-containing oxide (B) *13 | Crosslinking agent (C) *13 | Ti-containing oxide (D) *13 | | |
| T14 | 14 | 300 | 30 | 37 | 19 | 44 | 0 | 9.0 | Reference Example |
| T15 | 15 | 300 | 30 | 32 | 32 | <u>26</u> | 10 | 8.0 | **Comparative example** |
| T16 | 16 | 300 | 30 | 18 | 18 | <u>60</u> | 4 | 9.0 | **Comparative example** |

*11) End-point temperature for test sheet.
*12) Heating time to reach baking temerature (end-point temperature for test sheet).
*13) In terms of solid content.
*14) Coating weight of insulation coating per one side of test sheet.

3. Evaluation Test

The results of the evaluations are set forth in Table 5.

(3.1) Heat Resistance (as Interlaminar Insulation Resistance after Being Kept at High Temperatures)

The test sheets obtained in the above (1.5) were kept in the atmospheric air at 100°C for five days before they were measured in interlaminar insulation resistance in accordance with the interlaminar insulation resistance testing (method A) as defined in JIS C 2550 (2000). Criteria for evaluation are as follows. The interlaminar insulation resistance of the examples of the present invention at normal temperature was measured in accordance with the interlaminar insulation resistance testing (method A) as defined in JIS C 2550 (2000), and the values thereof were more than about 300 $\Omega \cdot cm^2$/sheet.

<Criteria for Evaluation>

H1: The interlaminar insulation resistance is not less than 200 [$\Omega \cdot cm^2$/sheet].
H2: The interlaminar insulation resistance is not less than 50 [$\Omega \cdot cm^2$/sheet] but less than 200 [$\Omega \cdot cm^2$/sheet].
H3: The interlaminar insulation resistance is not less than 30 [$\Omega \cdot cm^2$/sheet] but less than 50 [$\Omega \cdot cm^2$/sheet].
H4: The interlaminar insulation resistance is less than 30 [$\Omega \cdot cm^2$/sheet].

(3.2) Boiling water resistance (resistance to exposure to boiling steam)

Each of the various test sheets obtained in the above was exposed to boiling steam for 15 minutes and the appearance change thereof was visually observed. Criteria for evaluation are as follows.

<Criteria for Evaluation>

J1: No change.
J2: The degree to which some discoloration was visually recognized.
J3: The degree to which clear discoloration was visually recognized.
J4: The coating was dissolved.

(3.3) Scuff resistance (coating hardness)

Two test sheets of each type obtained by adjusting the size to 100 mm in width and 200 mm in length were prepared and these two test sheets were slid with each other at a pressure of 490kPA (5 kg/cm$^2$) and a relative speed of 2 cm/s for 10 seconds. Then scuffing of the surfaces of the test sheets was visually observed and the scuffing occurrence area fraction was evaluated. Criteria for evaluation are as follows.

<Criteria for Evaluation>

O1: The scuffing occurrence area fraction is 0%.
O2: The scuffing occurrence area fraction is more than 0% but not more than 5%.
O3: The scuffing occurrence area fraction is more than 5% but not more than 10%.
O4: The scuffing occurrence area fraction is more than 10% but not more than 50%.
O5: The scuffing occurrence area fraction is more than 50%.

(3.4) Compressibility at High Temperatures (Compression Test at High Temperatures)

For each type of the test sheets, a plurality of (i.e., about 200) test sheets were prepared and sheared into test pieces for compression test of 100 mm x 100 mm in size. Then, the test pieces for compression test as produced from the test sheets of the same type were stacked together to form a laminate with a height (a size in the stacking direction) of 100 mm ± 0.5 mm. The laminate thus obtained was applied with 1 MPa of compressive stress in the stacking direction at room temperature (23 ± 2°C), and the height d0 of the laminate was measured with the compressive stress being continuously applied thereto.

After the height d0 of the laminate was measured with the compressive stress being continuously applied thereto, the laminate continuously applied with the compressive stress as above was placed in a heating furnace (furnace atmosphere: atmospheric air) and heated so as to be subjected to heat treatment, namely, held at 180°C for 200 hours. After heat treatment, the laminate was taken out and cooled to room temperature (23 ± 2°C), whereafter the height d1 of the laminate was measured with the compressive stress being continuously applied thereto.

The compressibility of the laminate having undergone heat treatment (change between the heights of the laminate before and after heat treatment) was determined from the height d0 of the laminate before heat treatment and the height d1 of the same after heat treatment. The compressibility of the laminate was calculated with the following equation.

$$\text{Compressibility (\%)} = [(d0 - d1) / d0] \times 100$$

Criteria for evaluation are as follows.

<Criteria for Evaluation>

Q1: The compressibility is less than 0.5%.
Q2: The compressibility is not less than 0.5% but less than 1.0%.
Q3: The compressibility is not less than 1.0% but less than 1.5%.
Q4: The compressibility is not less than 1.5% but less than 2.0%.
Q5: The compressibility is not less than 2.0%.

The results of the above evaluations are set forth in Table 5. As evident from Table 5, the test sheets as examples of the present invention achieved favorable results for every evaluation item. The test sheets of Comparative Examples were inferior in boiling water resistance or scuff resistance to the examples of the present invention.

[Table 5]

| Test sheet No. | Coating material No. | Evaluation result | | | | Notes |
|---|---|---|---|---|---|---|
| | | Heat resistance | Boiling water resistance | Scuff resistance | Compressibility at high temperatures | |
| T1 | 1 | H1 | J1 | O3 | Q2 | **Example of invention** |
| T2 | 2 | H1 | J1 | O3 | Q1 | Reference Example |
| T3 | 3 | H1 | J1 | O1 | Q2 | Reference Example |
| T4 | 4 | H1 | J1 | O3 | Q1 | **Example of invention** |
| T5 | 5 | H1 | J1 | O3 | Q2 | Reference Example |
| T6 | 6 | H1 | J1 | O3 | Q3 | Reference Example |
| T7 | 7 | H1 | J1 | O1 | Q3 | Reference Example |
| T8 | 8 | H1 | J1 | O3 | O1 | **Example of invention** |

(continued)

| Test sheet No. | Coating material No. | Evaluation result | | | | Notes |
|---|---|---|---|---|---|---|
| | | Heat resistance | Boiling water resistance | Scuff resistance | Compressibility at high temperatures | |
| T9 | 9 | H1 | J1 | O2 | Q1 | **Example of invention** |
| T10 | 10 | H1 | J1 | O2 | Q1 | **Example of invention** |
| T11 | 11 | H1 | J1 | O3 | Q2 | Reference Example |
| T12 | 12 | H1 | J1 | O1 | O3 | Reference Example |
| T13 | 13 | H1 | J1 | O1 | O3 | Reference Example |
| T14 | 14 | H1 | J1 | O1 | O3 | Reference Example |
| T15 | 15 | H1 | J1 | <u>O4</u> | 02 | **Comparative example** |
| T16 | 16 | H1 | <u>J4</u> | O1 | Q2 | **Comparative example** |

INDUSTRIAL APPLICABILITY

The electric steel sheet obtained using the coating material for forming an insulation coating according to the present invention has an excellent hardness which is suitable for a material of iron cores used for large generators.

**Claims**

1. A coating material for forming an insulation coating, containing, in addition to a solvent:

an aqueous carboxy group-containing resin as component (A) in an amount of 100 parts by mass in terms of solid content;
an aluminum-containing oxide as component (B) in an amount of more than 40 parts by mass but less than 300 parts by mass in terms of solid content, based on the component (A) present in an amount of 100 parts by mass in terms of solid content;
at least one crosslinking agent as component (C) selected from the group consisting of melamine, isocyanate and oxazoline, in an amount of not less than 100 parts by mass but less than 300 parts by mass in terms of solid content, based on the component (A) present in an amount of 100 parts by mass in terms of solid content; and
a titanium-containing oxide as component (D) in an amount of more than 10 parts by mass but less than 300 parts by mass in terms of solid content, based on the component (A) present in an amount of 100 parts by mass in terms of solid content,
wherein the aqueous carboxy group-containing resin as component (A) has an acid value of 15 to 45 mg KOH/g.

2. A manufacturing method for an electrical steel sheet with an insulation coating, comprising forming an insulation coating on one or both of sides of an electrical steel sheet by applying thereto a coating material containing, in addition to a solvent:

an aqueous carboxy group-containing resin as component (A) in an amount of 100 parts by mass in terms of solid content;
an aluminum-containing oxide as component (B) in an amount of more than 40 parts by mass but less than 300 parts by mass in terms of solid content, based on the component (A) present in an amount of 100 parts by mass

in terms of solid content;

at least one crosslinking agent as component (C) selected from the group consisting of melamine, isocyanate and oxazoline, in an amount of not less than 100 parts by mass but less than 300 parts by mass in terms of solid content, based on the component (A) present in an amount of 100 parts by mass in terms of solid content; and a titanium-containing oxide as component (D) in an amount of more than 10 parts by mass but less than 300 parts by mass in terms of solid content, based on the component (A) present in an amount of 100 parts by mass in terms of solid content,

wherein the aqueous carboxy group-containing resin as component (A) has an acid value of 15 to 45 mg KOH/g.

3. The manufacturing method for an electrical steel sheet with an insulation coating according to claim 2, wherein the insulation coating has a coating weight per sheet side of not less than 0.9 g/m$^2$ but not more than 20 g/m$^2$.

4. An electrical steel sheet with an insulation coating, having an insulation coating formed by the manufacturing method according to claim 2 or 3.

**Patentansprüche**

1. Beschichtungsmaterial zur Bildung einer Isolationsbeschichtung, zusätzlich zu einem Lösungsmittel enthaltend:

ein wässriges Carboxygruppen-haltiges Harz als Komponente (A) in Bezug auf den Feststoffgehalt in einer Menge von 100 Massenteilen;

ein Aluminium-haltiges Oxid als Komponente (B) in Bezug auf den Feststoffgehalt in einer Menge von mehr als 40 Massenteilen aber weniger als 300 Massenteilen, basierend auf der Komponente (A), die in Bezug auf den Feststoffgehalt in einer Menge von 100 Massenteilen vorhanden ist;

mindestens ein Vernetzungsmittel als Komponente (C), ausgewählt aus der Gruppe, bestehend aus Melamin, Isocyanat und Oxazolin, in Bezug auf den Feststoffgehalt in einer Menge von nicht weniger als 100 Massenteilen aber weniger als 300 Massenteilen, basierend auf der Komponente (A), die in Bezug auf den Feststoffgehalt in einer Menge von 100 Massenteilen, vorhanden ist; und

ein Titan-haltiges Oxid als Komponente (D) in Bezug auf den Feststoffgehalt in einer Menge von mehr als 10 Massenteilen aber weniger als 300 Massenteilen, basierend auf der Komponente (A), die in Bezug auf den Feststoffgehalt in einer Menge von 100 Massenteilen vorhanden ist,

worin das wässrige Carboxygruppen-haltige Harz als Komponente (A) eine Säurezahl von 15 bis 45 mg KOH/g aufweist.

2. Verfahren zur Herstellung eines Elektrostahlblechs mit einer Isolationsbeschichtung, umfassend das Bilden einer Isolationsbeschichtung auf einer oder beiden Seiten eines Elektrostahlblechs durch Auftragen eines Beschichtungsmaterials, das zusätzlich zu einem Lösungsmittel enthält:

ein wässriges Carboxygruppen-haltiges Harz als Komponente (A) in Bezug auf den Feststoffgehalt in einer Menge von 100 Massenteilen;

ein Aluminium-haltiges Oxid als Komponente (B) in Bezug auf den Feststoffgehalt in einer Menge von mehr als 40 Massenteilen aber weniger als 300 Massenteilen, basierend auf der Komponente (A), die in Bezug auf den Feststoffgehalt in einer Menge von 100 Massenteilen vorhanden ist;

mindestens ein Vernetzungsmittel als Komponente (C), ausgewählt aus der Gruppe, bestehend aus Melamin, Isocyanat und Oxazolin, in Bezug auf den Feststoffgehalt in einer Menge von nicht weniger als 100 Massenteilen aber weniger als 300 Massenteilen, basierend auf der Komponente (A), die in Bezug auf den Feststoffgehalt in einer Menge von 100 Massenteilen, vorhanden ist; und

ein Titan-haltiges Oxid als Komponente (D) in Bezug auf den Feststoffgehalt in einer Menge von mehr als 10 Massenteilen aber weniger als 300 Massenteilen, basierend auf der Komponente (A), die in Bezug auf den Feststoffgehalt in einer Menge von 100 Massenteilen vorhanden ist,

worin das wässrige Carboxygruppen-haltige Harz als Komponente (A) eine Säurezahl von 15 bis 45 mg KOH/g aufweist.

3. Verfahren zur Herstellung eines Elektrostahlblechs mit einer Isolationsbeschichtung gemäß Anspruch 2, worin die Isolationsbeschichtung ein Beschichtungsgewicht pro Blechseite von nicht weniger als 0,9 g/m$^2$ aber nicht mehr als 20 g/m$^2$ aufweist.

**4.** Elektrostahlblech mit einer Isolationsbeschichtung, das eine durch das Herstellungsverfahren gemäß Anspruch 2 oder 3 gebildete Isolationsbeschichtung aufweist.

**Revendications**

**1.** Matériau de revêtement pour former un revêtement isolant, contenant, en plus d'un solvant :

une résine contenant des groupes carboxy aqueuse en tant que composant (A) en une quantité de 100 parties en masse en termes de contenu solide ;
un oxyde contenant de l'aluminium en tant que composant (B) en une quantité supérieure à 40 parties en masse mais inférieure à 300 parties en masse en termes de contenu solide, sur la base du composant (A) présent en une quantité de 100 parties en masse en termes de contenu solide ;
au moins un agent de réticulation en tant que composant (C) sélectionné parmi le groupe constitué par la mélamine, l'isocyanate et l'oxazoline, en une quantité pas inférieure à 100 parties en masse mais inférieure à 300 parties en masse en termes de contenu solide, sur la base du composant (A) présent en une quantité de 100 parties en masse en termes de contenu solide ; et
un oxyde contenant du titane en tant que composant (D) en une quantité supérieure à 10 parties en masse mais inférieure à 300 parties en masse en termes de contenu solide, sur la base du composant (A) présent en une quantité de 100 parties en masse en termes de contenu solide,
dans lequel la résine contenant des groupes carboxy aqueuse en tant que composant (A) a un indice d'acide de 15 à 45 mg de KOH/g.

**2.** Procédé de fabrication pour une feuille d'acier électrique avec un revêtement isolant, comprenant la formation d'un revêtement isolant sur une ou les deux faces d'une feuille d'acier électrique en appliquant dessus un matériau de revêtement contenant, en plus d'un solvant :

une résine contenant des groupes carboxy aqueuse en tant que composant (A) en une quantité de 100 parties en masse en termes de contenu solide ;
un oxyde contenant de l'aluminium en tant que composant (B) en une quantité supérieure à 40 parties en masse mais inférieure à 300 parties en masse en termes de contenu solide, sur la base du composant (A) présent en une quantité de 100 parties en masse en termes de contenu solide ;
au moins un agent de réticulation en tant que composant (C) sélectionné parmi le groupe constitué par la mélamine, l'isocyanate et l'oxazoline, en une quantité pas inférieure à 100 parties en masse mais inférieure à 300 parties en masse en termes de contenu solide, sur la base du composant (A) présent en une quantité de 100 parties en masse en termes de contenu solide ; et
un oxyde contenant du titane en tant que composant (D) en une quantité supérieure à 10 parties en masse mais inférieure à 300 parties en masse en termes de contenu solide, sur la base du composant (A) présent en une quantité de 100 parties en masse en termes de contenu solide,
dans lequel la résine contenant des groupes carboxy aqueuse en tant que composant (A) a un indice d'acide de 15 à 45 mg de KOH/g.

**3.** Procédé de fabrication pour une feuille d'acier électrique avec un revêtement isolant selon la revendication 2, dans lequel le revêtement isolant a un poids de revêtement par face de feuille pas inférieur 0,9 g/m$^2$ mais pas supérieur à 20 g/m$^2$.

**4.** Feuille d'acier électrique avec un revêtement isolant, ayant un revêtement isolant formé par le procédé de fabrication selon la revendication 2 ou 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60070610 A
- JP 2009235530 A
- JP 2013209739 A
- EP 2821523 A